# EUROPEAN PATENT SPECIFICATION

(11) **EP 4 314 985 B1**
(45) Date of publication and mention of the grant of the patent: **06.05.2026**
(21) Application number: 22782044.6
(22) Date of filing: 29.03.2022
(51) Int. Cl.: G06Q 10/0834

(54) **LOGISTICS COMMUNICATION FLOW SYSTEMS AND METHODS**
LOGISTIKKOMMUNIKATIONSFLUSSSYSTEME UND -VERFAHREN
SYSTÈMES ET PROCÉDÉS DE FLUX DE COMMUNICATION LOGISTIQUE

(30) Priority: 29.03.2021 US 202163167637 P
(43) Date of publication of application: 07.02.2024
(73) Proprietor: Hudicka, Joseph, Flemington, NJ 08822 (US)
(72) Inventor: Hudicka, Joseph, Flemington, NJ 08822 (US)
(74) Representative: Rössler, Thomas
(86) International application number: PCT/US2022/022395
(87) International publication number: WO 2022/212410

(56) References cited:
- US-A1- 2014 058 775
- US-A1- 2014 058 775
- US-A1- 2016 335 593
- US-A1- 2016 335 593
- US-A1- 2021 004 739
- US-A1- 2021 004 739

## Description

### CLAIM OF PRIORITY, IDENTIFICATION OF RELATED APPLICATIONS

This Non-Provisional Patent Application claims priority from US Provisional Patent Application No. 63/167,637 filed on the 29th March 2021 entitled Global Transportation and Logistics Shipper Demand Flow Platform, to common inventor Joseph Hudika.

### TECHNICAL FIELD

The present invention generally relates to logistics communications platform, and more specifically to logistics communication flow systems and methods.

Document US 2014/058775 A1 discloses providing data and analysis useful in recognizing an investment and supply chain, involving forecasting a set of tasks related to the set of transportation vehicles and the set of cargo types to inter future supply of cargo types. Document US 2016/335593 A1 refers to providing efficient matching of shipments with carriers and real-time online tracking of shipments.

### PROBLEM STATEMENT AND HISTORY

### INTERPRETATION CONSIDERATIONS

This section describes technical field in detail and discusses problems encountered in the technical field. Therefore, statements in the section are not to be construed as prior art.

### DISCUSSION OF HISTORY OF THE PROBLEM

The logistics industry is a large industry comprising complex communications channels among shippers, carriers, freight forwarders, traders, for example. Currently, the logistics industry does not allow micro-level customization of communication flow among all the users and requires more transparent understanding of global shipper demand in order to optimize the flow of goods, and the cost of moving them. That is, the logistics industry is well overdue to make optimization pivot from a capacity model to one which is driven by the global shipper demand. There is presently no solution to these drawbacks. Accordingly, the present invention provides such a solution.

### SUMMARY

The above objective is achieved by logistics communication flow systems and methods as defined in claims.

The logistics communication flow system comprises a processor, a memory and a demand and capacity maximizer module coupled with the processor and the memory. The demand and capacity maximizer module is configured to receive at least one capacity dataset, at least one demand dataset, and at least one conditions dataset and configure a decision making algorithm based on the at least one capacity dataset, the at least one demand dataset, the at least one conditions dataset. The at least one capacity dataset comprises a logistics partner capacity dataset, a logistics partner contract dataset, a logistics partner booking dataset, a logistics partner sub-contractor dataset, a logistics partner event dataset, a logistics partner financial dataset and a logistics partner qualitative dataset. The at least one demand dataset comprises a shipper demand dataset, a shipper contract dataset, a shipper booking dataset, a shipper sub-contractor dataset, a shipper event dataset, a shipper financial dataset and a shipper qualitative dataset. The at least one conditions dataset comprises a weather dataset, a traffic dataset, an economy dataset, a customs dataset, a world events dataset, a sustainability dataset and an index dataset.

The demand and capacity maximizer module further determines at least one prediction data based on the configured decision making algorithm using an artificial intelligence (AI) block, wherein the prediction data corresponds to an on-time prediction, an in-budget prediction, a loss prediction, a contract conversion prediction, a demand volatility prediction, a sustainability prediction and a happiness prediction.

The demand and capacity maximizer module learns at least one feedback data over a period of time using the AI block and modifies the at least one prediction data using the at least one feedback data, wherein the at least one feedback data comprises a supplier feedback data, a manufacturer feedback data, a consumer products group feedback data, a distributor feedback data, a logistics partner feedback data, and a retailer feedback data.

Of course, the present is simply a Summary, and not a complete description of the invention.

### BRIEF DESCRIPTION OF THE DRAWINGS

Various aspects of the invention and its embodiment are better understood by referring to the following detailed description. To understand the invention, the detailed description should be read in conjunction with the drawings.
Figure 1 illustrates a logistics communication flow system.
Figure 2 illustrates various inputs and outputs in the logistics communication flow system.
Figure 3 is a flow diagram illustrating an inventive logistics communication flow method.
Figure 4 continues the flow diagram of Figure 3 illustrating an inventive logistics communication flow method.
Figure 5 continues the flow diagram of Figure 3 illustrating an inventive logistics communication flow method.
Figure 6 continues the flow diagram of Figure 3 illustrating an inventive logistics communication flow method.

### DESCRIPTION OF AN EXEMPLARY PREFERRED EMBODIMENT INTERPRETATION CONSIDERATIONS

While reading this section (*Description of An Exemplary Preferred Embodiment,* which describes the exemplary embodiment of the best mode of the invention, hereinafter referred to as "exemplary embodiment"), one should consider the exemplary embodiment as the best mode for practicing the invention during filing of the patent in accordance with the inventor's belief. As a person with ordinary skills in the art may recognize substantially equivalent structures or substantially equivalent acts to achieve the same results in the same manner, or in a dissimilar manner, the exemplary embodiment should not be interpreted as limiting the invention to one embodiment.

The discussion of a species (or a specific item) invokes the genus (the class of items) to which the species belongs as well as related species in this genus. Similarly, the recitation of a genus invokes the species known in the art. Furthermore, as technology develops, numerous additional alternatives to achieve an aspect of the invention may arise. Such advances are incorporated within their respective genus and should be recognized as being functionally equivalent or structurally equivalent to the aspect shown or described.

A function or an act should be interpreted as incorporating all modes of performing the function or act, unless otherwise explicitly stated. For instance, sheet drying may be performed through dry or wet heat application, or by using microwaves. Therefore, the use of the word "paper drying" invokes "dry heating" or "wet heating" and all other modes of this word and similar words such as "pressure heating".

Unless explicitly stated otherwise, conjunctive words (such as "or", "and", "including", or "comprising") should be interpreted in the inclusive and not the exclusive sense.

As will be understood by those of the ordinary skill in the art, various structures and devices are depicted in the block diagram to not obscure the invention. In the following discussion, acts with similar names are performed in similar manners, unless otherwise stated.

The foregoing discussions and definitions are provided for clarification purposes and are not limiting. Words and phrases are to be accorded their ordinary, plain meaning, unless indicated otherwise.

### DESCRIPTION OF THE DRAWINGS, A PREFERRED EMBODIMENT

The present invention provides logistics communication flow systems and methods using a set of algorithms which project global shipper demand, and enable carriers and service providers to optimize their assets for maximum shipment flow, and mutually profitable success. The present invention is a data enrichment platform which combines more than twelve data sets relevant to planning and fulfilling shipments globally, upon which the set of algorithms is applied to provide carriers clear view of true global demand, a method for winning this business, and a method for all parties to be rewarded for customer success, on every single shipment.

Advantageously, the present invention provides an advanced warning system on logistics contract performance, so ship can meet their demand promises without becoming logistics experts and logistics partners can anticipate where their customers need the next, keeping more volume in logistics contract.

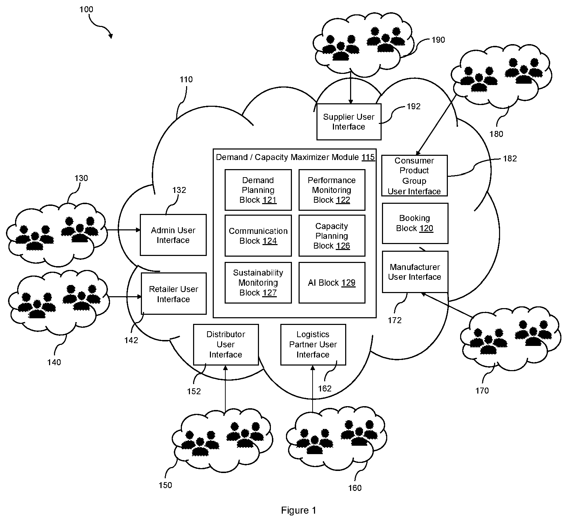

Accordingly, Figure 1 illustrates a logistics communication flow system 100. The logistics communication flow system 100 is, but not limited to, a cloud-based system. The logistics communication flow system 100 may comprise subsystems, hardware, distributed computing, software, entity interfaces, and user interfaces which enable and deliver the services/functions of the present invention as described herein.

The logistics communication flow system 100 generally comprises a cloud-based platform 110 that further comprises a demand and capacity maximizer module 115, a booking block 120 and a plurality of user interfaces like an admin user interface 132, a retailer user interface 142, a distributor user interface 152, a logistics partner user interface 162, a manufacturer user interface 172, a consumer product group user interface 182, a supplier user interface 192, for example, for a plurality of users 130, 140, 150, 160, 170, 180, 190 respectively. Each of the plurality of users 130, 140, 150, 160, 170, 180, 190 can access the demand and capacity maximizer module 115 using their respective user interfaces 132, 142, 152, 162, 172, 182, 192 via respective user terminals (not shown). The user terminals can be a laptop, a notebook, a desktop computer, a vehicle to everything (V2X) device, a smartphone, a tablet, an internet of things (IoT) device, a television with communication facility, an immersive device, a virtual reality device, a pager or any other computing device including similar hardened and field-specific devices, for example.

The demand and capacity maximizer module 115 acts as a core element of the cloud-based platform 110 and comprises a demand planning block 121, a performance monitoring block 122, a communication block 124, a capacity planning block 126, a sustainability monitoring block 127 and an AI (Artificial Intelligence) block 129.

The demand planning block 121 is configured to be accessed by a shipper in the logistics communication flow system 100 for demand planning. The demand planning block 121 is configured to determine type and volume of commodity that needs to be moved/shipped to a destination from a source in a given timeframe along with frequency of the volume of commodity that needs to be moved/shipped. The demand planning block 121 also acts as a forecasting tool for the participating logistics partners for their needs in logistics activity. Advantageously, the demand planning block 121 saves time as compared to existing logistics contract performance platforms and techniques.

Once a shipment gets booked through the booking block 120, the same gets executed. That is, after a contract of capacity for demand, the performance monitoring block 122 monitors the performance of each operation in the logistics communication flow system 100, where the operations have a sequence of events ("planned events") that occur during shipping procedure. The performance monitoring block 122 monitors one or more factors. The one or more factors include transit time, cost, for example. The performance monitoring block 122 is configured to evaluate success rate of the planned events. That is, the performance monitoring block 122 analyses the whole supply chain process by utilizing a performance indicator such as On Time in Full (OTIF) delivery, for example. Typically, On Time in Full means a company was able to deliver the full quantity requested by a customer on a requested date.

The performance monitoring block 122 is configured to measure performance in terms of score. In an example scenario, a company contractually has a commitment for a shipment on a particular trade lane, where from an origin A to destination B, it should take three days. In such a case, the performance monitoring block 122 will score every one of the shipments that are executed on that route, i.e., origin A to destination B. The performance monitoring block 122 facilitates fair and balanced scoring and automates performance and reliability scoring for the performance of suppliers, shippers and logistics partners, in a reliable manner, on a macro level, so as to truly assess any given participant across their entire set of relationships, as opposed to limited lenses offered by traditional Enterprise Resource Planning (ERP) systems or Track Management System (TMS) systems, which only has visibility into a limited set of relationships within a given network. Although this is described from the perspective of the shipper, but the principles apply equally to any party in the logistics communication flow system 100. For example, the shipper such as supplier, manufacturer, consumer products group or logistics partner can be scored to deliver a fair, balanced and transparent scoring system that is understandable and accessible by each user/contributor in the logistics communication flow system 100.

Along with the transit time, the performance monitoring block 122 also monitors and scores the quality of the commodity (or goods) in terms of loss of the commodity, damage to the commodity, theft, for example. The performance monitoring block 122 automatically measures pass or fail on the performance of the contract/commitment a carrier made to the shipper and vice versa, the contract/commitment the shipper made in terms of volume to the carrier, costing, for example.

The performance monitoring block 122 taps into data streams of the contract and determines whether the performance of the contract is delivered or not. In an embodiment of the present invention, the performance monitoring block 122 may utilize feedbacks for performance measurement.

The communication block 124 enables and simplifies communication between all of participants of the logistics communication flow system 100 by bringing an instant messaging layer as a central mode of communication between each other. When demand changes, the right participants can quickly swarm that issue together through a simple text message. In this way, the communication block 124 enables true just in time pickup and delivery unlike existing platforms and brings transparency in capacity and demand in the logistics communication flow system 100. The text message, through a threaded communication interface, enables the participants to rapidly alert their team, their customers, their suppliers and their logistics partners of a previously unanticipated shift in capacity or demand. The threaded communication interface (e.g., swarming interface or the like) is formed upon a user configurable, automated workflow, which includes escalation rules management, and records the entire communication history from alert to resolution in the logistics communication flow system 100.

The capacity planning block 126 is configured for capacity planning to manage distributing or offering capacity to customers.

The sustainability monitoring block 127 is configured to monitor sustainability and provide a sustainability score, where every participant provides a true carbon impact to their part in each supply chain.

The AI (Artificial Intelligence) block 129 implements a machine learning method called deep learning. The machine learning method enables the platform to automatically learn and improve from experience, over a period of time, without being explicitly programmed. The deep learning method uses a neural network capable of learning in an unsupervised manner from data that is unstructured or unlabeled. Deep learning is a method of machine learning that employs multiple layers of neural networks that enable the platform of the present invention to teach itself through inference and pattern recognition, rather than development of procedural code or explicitly coded software algorithms (however, machine learning is augmented and enhanced with software algorithms). The neural networks are modeled according to the neuronal structure of a mammal's cerebral cortex, where neurons are represented as nodes and synapses are represented as uniquely weighted paths or "tolled roads" between the nodes. The nodes are then organized into layers to comprise a network. Additionally, the neural networks are organized in a layered fashion that includes an input layer, intermediate or hidden layers, and an output layer.

The neural networks enhance their learning capability by varying the uniquely weighted paths based on received input. The successive layers within the neural network incorporate the learning capability by modifying their weighted coefficients based on their received input patterns. From this foundation, one can see that the training of the neural networks is very similar to how we teach children to recognize an object. The neural network is repetitively trained from a base data set, where results from the output layer (or, simply "output") are successively compared to the correct classification.

Alternatively, any machine learning paradigm instead of neural networks can be used in the training and learning process.

The AI block 129 supports several different scoring algorithms oriented on the demand planning, the capacity planning, the performance monitoring or the like to make recommendations initially and eventually train the AI block 129 itself to be prescriptive. The AI block 129 supports a predictive data generation process which takes historical input of data sources including, but not limited to, capacity, demand and past performance, and applies alternative scenarios of weighted prediction of future events, to simulate the outcomes of those scenarios, so the users of the logistics communication flow system 100 can compare and contrast the results, determine the likelihood of each becoming reality, and leverage these insights to make informed decisions and business actions.

Now referring to the plurality of user interfaces and the plurality of users. At least one administrator 130 through the admin user interface 132 operates, upgrades, maintains and manages the cloud-based platform 110. At least one retailer 140 (i.e., shippers) through the retailer user interface 142 interacts with the cloud-based platform 110. The at least one retailer 140 is a user who effectively reports his demand at a consumer level. Similarly, at least one distributor 150 through the distributor user interface 152 interacts with the cloud-based platform 110. The at least one distributor 150 is a user that typically purchases product at wholesale prices and manages warehousing and organization of product distributing across multiple warehouses based on the demand. At least one logistics partner 160 (i.e., transporter or the like) through the logistics partner user interface 162 interacts with the cloud-based platform 110 for logistics related activity. At least one manufacturer 170 (i.e., product manufacturer or the like) through the manufacturer user interface 172 interacts with the cloud-based platform 110 for manufacturing related activities. At least one consumer 180 through the consumer product group user interface 182 interacts with the cloud-based platform 110 for ordering and receiving commodities. At least one supplier 190 through the supplier user interface 192 interacts with the cloud-based platform 110 for shipment of the commodities.

Additionally, the cloud-based platform 110 includes a processing unit (not shown) having one or more processors, which may be configured to perform all the processing functionalities of the present invention. The one or more processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU), for example. A function associated with the AI block 129 may be performed by utilizing the information stored in a storage unit (not shown) like a non-volatile memory, volatile memory, for example and by utilizing the processing unit.

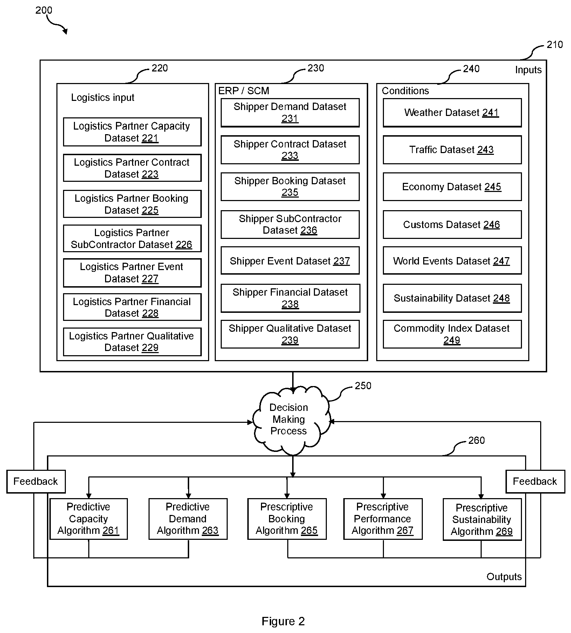

Figure 2 illustrates various inputs and outputs in the logistics communication flow system 100. The logistics communication flow system 100 implements a decision making process 250 to provide recommendations to the plurality of users (e.g., suppliers, manufacturers, consumer products groups, logistics partners, retailers or the like). The recommendations correspond to a logistics supply chain. The demand and capacity maximizer module 115 receives one or more inputs 210. The one or more inputs 210 can be, for example, but not limited to a logistics input 220, an Enterprise Resource Planning (ERP) / Supply Chain Management (SCM) based inputs 230 and one or more condition datasets 240. The logistics input 220 can be a logistics partner capacity dataset 221, a logistics partner contract dataset 223, a logistics partner booking dataset 225, a logistics partner subcontractor dataset 226, a logistics partner event dataset 227, a logistics partner financial dataset 228 and a logistics partner qualitative dataset 229, for example. The ERP / SCM based inputs 230 can be a shipper demand dataset 231, a shipper contract dataset 233, a shipper booking dataset 235, a shipper subcontractor dataset 236, a shipper event dataset 237, a shipper financial dataset 238, and a shipper qualitative dataset 239, for example. The one or more condition datasets 240 can be a weather dataset 241, a traffic dataset 243, an economy dataset 245, a customs dataset 246, a world events dataset 247, a sustainability dataset 248, a commodity index dataset 249, for example.

The logistics partner capacity dataset 221 identifies all the different types of equipment or apparatus handled by the logistics partner. In an example, if the logistics partner is an ocean carrier, then the logistics partner capacity dataset 221 includes ship details that are carrying containers. In another example, if the logistics partner is a tanker, then the logistics partner capacity dataset 221 includes a tanker information, a type of tanker and tanker working condition or the like. The logistics partner capacity dataset 221 also includes a pickup address of the logistics partner, a destination address of the logistics partner, and cost details of the logistics partner.

The logistics partner contract dataset 223 includes previous contract information of the logistics partner and current contract information of the logistics partner.

The logistics partner booking dataset 225 includes booking details and transaction details about the logistics partner. In an example, the booking details indicate when a vehicle is booked and for what purpose along with cost details. In another example, the booking details indicate actual pick-up data of the vehicle and delivery/return date of the vehicle.

The logistics partner subcontractor dataset 226 includes a logistics partner subcontractor information. In an example, the logistics partner subcontractor dataset 226 indicates agreement between two or three logistics partners and how they helping each other based on the requirement.

The logistics partner event dataset 227 includes a shipment's journey between one place to another place, any specific event on the journey days (for example, new year celebration on the journey days).

The logistics partner financial dataset 228 includes service level agreement details between the logistics partners, payment details of the logistics partners, negotiation details and expenditure details of the logistics partners.

The logistics partner qualitative dataset 229 includes logistics partners experiences in the entire existence being of the logistics partner.

The shipper demand dataset 231 predicts the demand(s) of the shipper. For example, what the shipper company needs to move, when to move and what is the volume level based on a transportation management system (TMS). The shipper demand is computed based on the previous history and current event. The shipper contract dataset 233 includes previous contract information of the shipper and current contract information of the shipper. The shipper booking dataset 235 includes booking details and transaction details about the shipper. The shipper subcontractor dataset 236 includes the shipper subcontractor information. The shipper event dataset 237 includes the shipment's journey between one place to another place, any specific event on the journey days (for example, new year celebration on the journey days). The shipper financial dataset 238 includes service level agreement details, payment details, negotiation details and expenditure details. The shipper qualitative dataset 239 includes experiences in the entire existence being of the shipper.

The weather dataset 241 indicates the weather condition impacting or supporting a transport service and a supply chain service. The traffic dataset 243 indicates the traffic condition impacting or supporting the transport service and the supply chain service. The economy dataset 245 indicates the economy status. The customs dataset 246 indicates cargo details/servicers between the places along with bills and tax, international trips, national travel of the cargo, and a state-wise travel of the cargo. The world events dataset 247 indicates event details in the world. For example, strike at a port long beach at USA, a volcano issue in Japan or the like. The sustainability dataset 248 indicates resource details (e.g., resource waste information, resource reusable information or the like). The commodity index dataset 249 indicates fuel information, agriculture information or the like.

The demand and capacity maximizer module 115 initiates the decision making process 250 based on the received input 210. The demand and capacity maximizer module 115, based on the decision making process 250, generates a predictive capacity algorithm 261, a predictive demand algorithm 263, a prescriptive booking algorithm 265, a prescriptive performance algorithm 267, and a prescriptive sustainability algorithm 269. Each of the predictive capacity algorithm 261, the predictive demand algorithm 263, the prescriptive booking algorithm 265, the prescriptive performance algorithm 267, and the prescriptive sustainability algorithm 269 generates the feedback for finetuning the decision making process 250.

The predictive capacity algorithm 261 predicts a reliability of the capacity of the logistics partner. The predictive demand algorithm 263 predicts a reliability of the demand that the shippers are promising to the customer. Based on the predication, the logistics communication flow system 100 provides the recommendations to the shippers and the logistics partner based on the capacity and demand indicators.

The prescriptive booking algorithm 265 determines that all bookings handled by the logistics communication flow system 100 are without any confusion or delay. The prescriptive performance algorithm 267 determines a performance of a capacity side and a demand side based on an activity history, a relationship of a customer, and a deliverability data. The prescriptive performance algorithm 267 improves the logistics supply chain. The prescriptive performance algorithm 267 determines a performance of a capacity side and a demand side in terms of score or weight value. In an example, a performance score of a first logistics store is 95 and a performance score of a second logistics store is 72. Based on the performance score, the prescriptive performance algorithm 267 determines and selects the first logistics store for customer need.

The prescriptive sustainability algorithm 269 collects all the data about the retailers, manufactures, companies, logistics, supply chain or the like. Based on the collected data, the prescriptive sustainability algorithm 269 advertises or notifies the product or goods, what the environmental impact is of that particular product the customer purchasing.

Although Figure 1 and Figure 2 show various components of the logistics communication flow system 100 but it is to be understood that other embodiments are not limited thereon. The logistics communication flow system 100 may include less or more number of components. Further, the labels or names of the components are used only for illustrative purpose and does not limit the scope of the present invention. One or more components can be combined together to perform same or substantially similar function in the logistics communication flow system 100.

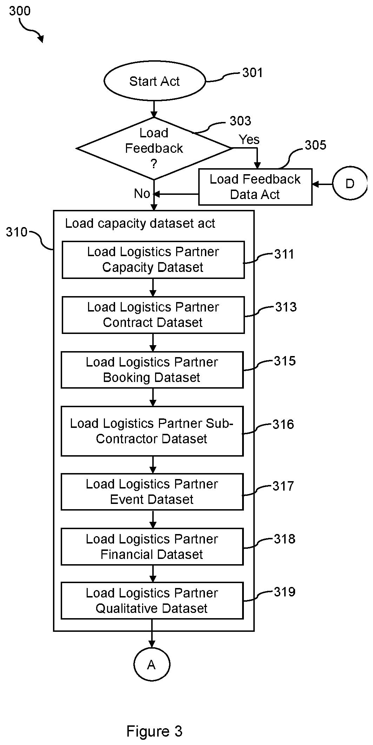

Figure 3 to Figure 6 are flow diagrams 300 illustrating logistics communication flow method or algorithm. It may be noted that Figures 3 through 6 are to be understood in conjunction with Figure 1 and Figure 2.

The operations of the logistics communication flow system 100 begin at a start act 301. Referring to Figure 3, following the start act 301, the demand and capacity maximizer module 115 determines whether a feedback data is to be loaded or not in a load feedback query 303. If the feedback data is to be loaded, then the logistics communication flow method proceeds to a load feedback data act 305 as shown by "Yes" path and loads suppliers feedback data 371, manufacturers feedback data 373, consumer products groups feedback data 375, distributors feedback data 376, logistics partners feedback data 377 and retailers feedback data 379. After loading the feedback data in load feedback data act 305, the logistics communication flow method proceeds to a load capacity dataset act 310. Similarly, if the feedback data is not to be loaded, then the logistics communication flow method proceeds to the load capacity dataset act 310 as shown by "No" path.

In the load capacity dataset act 310, at step 311, step 313, step 315, step 316, step 317, step 318, and step 319, the capacity planning block 126 loads the logistics partner capacity dataset 221, the logistics partner contract dataset 223, the logistics partner booking dataset 225, the logistics partner sub-contractor dataset 226, the logistics partner event dataset 227, the logistics partner financial dataset 228, and the logistics partner qualitative dataset 229, respectively. The details of the logistics partner capacity dataset 221, the logistics partner contract dataset 223, the logistics partner booking dataset 225, the logistics partner sub-contractor dataset 226, the logistics partner event dataset 227, the logistics partner financial dataset 228, and the logistics partner qualitative dataset 229 are already explained in conjunction with Figure 2.

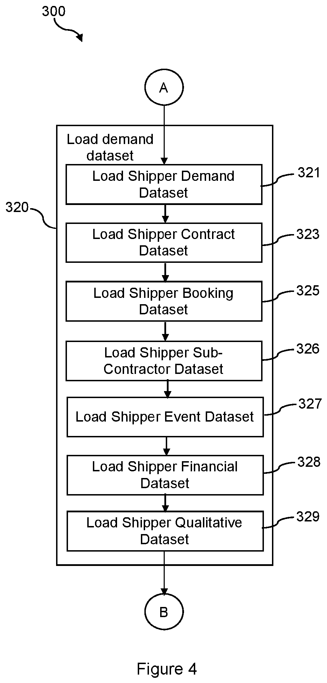

Following the load capacity dataset act 310, a load demand dataset act 320 begins. Referring to Figure 4, in the load demand dataset act 320, at step 321, step 323, step 325, step 326, step 327, step 328, and step 329, the demand planning block 121 loads the shipper demand dataset 231, the shipper contract dataset 233, the shipper booking dataset 235, the shipper sub-contractor dataset 236, the shipper event dataset 237, the shipper financial data 238 and the shipper qualitative data 239, respectively. The details of the shipper demand dataset 231, the shipper contract dataset 233, the shipper booking dataset 235, the shipper sub-contractor dataset 236, the shipper event dataset 237, the shipper financial data 238 and the shipper qualitative data 239 are already explained in conjunction with Figure 2.

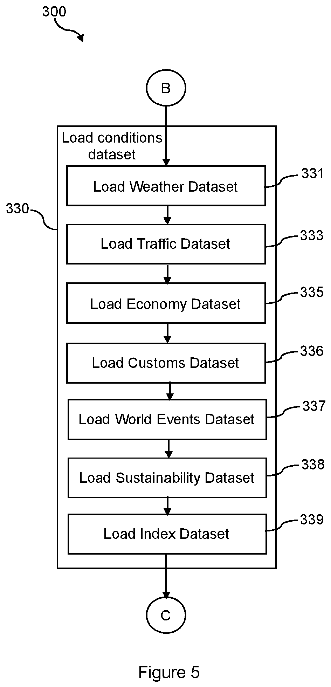

Following the load demand dataset act 320, a load conditions dataset act 330 begins. Referring to Figure 5, in the load conditions dataset act 330, at step 331, step 333, step 335, step 336, step 337, step 338, and step 339, the demand and capacity maximizer module 115 loads the weather dataset 241, the traffic dataset 243, the economy dataset 245, the customs dataset 246, the world events dataset 247, the sustainability dataset 248 and the index dataset 249. The details of the weather dataset 241, the traffic dataset 243, the economy dataset 245, the customs dataset 246, the world events dataset 247, the sustainability dataset 248 and the index dataset 249 are already explained in conjunction with Figure 2.

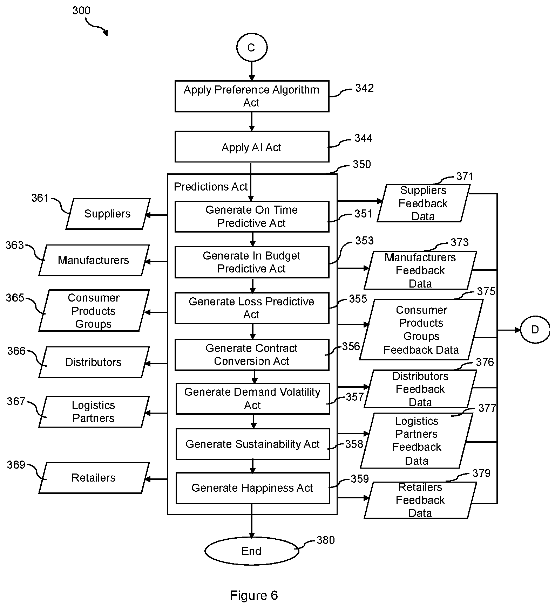

Referring to Figure 6, following the load conditions dataset act 330, a preference algorithm is applied in apply preference algorithm act 342, where the preference algorithm includes at least one of the predictive capacity algorithm 261, the predictive demand algorithm 263, the prescriptive booking algorithm 265, the prescriptive performance algorithm 267 and the prescriptive sustainability algorithm 269 as explained above. Further, the method applies AI Act using the AI block 129 in apply AI act 344.

Following the apply AI act 344, a predictions act 350 begins which generates various predictions as explained below. In generate on-time predictive act 351, the demand and capacity maximizer module 115 generates predictive values (e.g., transportation time, transportation cost, delivery time or the like) corresponding to the transportation, the logistics partners, the shipper and the supply chain based on the past events. In generate in-budget predictive act 353, the demand and capacity maximizer module 115 generates/ predicts the budgets based on the current price along with the current market value and generates the score based on the variance based on the current price along with the current market value. In generate loss predictive act 355, the demand and capacity maximizer module 115 generates/predicts the loss or damage of goods/commodities during the supply chain. Further, in generate contract conversion act 356, the demand and capacity maximizer module 115 defines that shippers are going to be held accountable for the volume that they promised in a contract during the supply chain. In generate demand volatility act 357, the demand and capacity maximizer module 115 generates the confidence level on the demand forecast at the shippers based on various events (e.g., past history or the like). In generate sustainability act 358, the demand and capacity maximizer module 115 generates a score on an overall environmental footprint for all products that are being created, shipped, delivered and sold to end customers. In generate happiness act 359, the demand and capacity maximizer module 115 generates happiness. The generate happiness act 359 is all about qualitative input and an end customer feedback. For example, if the end customer's feedback is zero, which means the end customer does not like the service/product.

The outcome of the predictions act 350 is provided to the users (e.g., suppliers, manufacturers, consumer product groups, distributors, logistics partners, and retailers) at step 361, step 363, step 365, step 366, step 367, step 369 respectively at any time to improve the supply chain service based on the predictive data.

With the use of the predictions act 350, at step 371, step 373, step 375, step 376, step 377 and step 379, the demand and capacity maximizer module 115 provides the suppliers feedback data, the manufacturers feedback data, the consumer products groups feedback data, the distributors feedback data, the logistics partners feedback data, and the retailers feedback data, respectively. The logistics communication flow method or algorithm terminates in an end act 380.

Digital Twin Generator - a predictive data generation process which takes historical input of data sources including but not limited to capacity, demand and past performance, and applying alternative scenarios of weighted prediction of future events, to simulate the outcomes of those scenarios, so the use can compare and contrast the results, determine the likelihood of each becoming reality, and leveraging these insights to make informed decisions and business actions.

Logistics Risk Swarming - an intuitive text message, threaded communication interface which enables users to rapidly alert their team, their customers, their suppliers and their logistics partners of a previously unanticipated shift in capacity or demand. This swarming interface is formed upon user configurable, automated workflows, which include escalation rules management, and records the entire communication history from alert to resolution.

Performance Scoring - Objectively, automating performance and reliability scoring for the performance of suppliers, shippers and logistics partners, on a macro level, so as to truly assess any given participant across their entire set of relationships, as opposed to the limited lense offered by traditional ERP or TMS systems, which only has visibility into a limited set of relationships within a given network.

The various actions, acts, blocks, steps, or the like in the flow diagrams 300 may be performed in the order presented, in a different order or simultaneously. Further, in some embodiments, some of the actions, acts, blocks, steps, or the like may be omitted, added, modified, skipped, or the like without departing from the scope of the present invention as described by the appended claims.

Unless otherwise defined, all technical and scientific terms used herein have the same meaning as commonly understood by one of ordinary skill in the art to which this invention belongs. Although methods and materials similar to or equivalent to those described herein can be used in the practice or testing of equivalent systems and methods, suitable systems and methods and are described above.

Although the invention has been described and illustrated with specific illustrative embodiments, it is not intended that the invention be limited to those illustrative embodiments. Those skilled in the art will recognize that variations and modifications can be made without departing from the invention as described by the appended claims.

Therefore, it is intended to include within the invention, all such variations and departures that fall within the scope of the appended claims and equivalents thereof.

## Claims

1. A logistics communication flow system, comprising:
a processor;
a memory adapted to implement communications via a cloud-based platform; and
the cloud-based platform having a demand and capacity maximizer module configured to:
receive a capacity dataset, a demand dataset, and a conditions dataset, wherein the capacity dataset comprises a logistics partner capacity dataset, a logistics partner contract dataset, a logistics partner booking dataset, a logistics partner sub-contractor dataset, a logistics partner event dataset, a logistics partner financial dataset and a logistics partner qualitative dataset;
configure a decision making algorithm based on the capacity dataset, the demand dataset, and the conditions dataset;
determine a prediction data based on the configured decision making algorithm using an artificial intelligence (Al) block, wherein the prediction data corresponds to an on-time prediction, an in-budget prediction, a loss prediction, a contract conversion prediction, a demand volatility prediction, a sustainability prediction and a happiness prediction, wherein determining the prediction data based on the configured decision making algorithm using the Al block comprises generating a predictive capacity algorithm, a predictive demand algorithm, a prescriptive booking algorithm, a prescriptive performance algorithm, and a prescriptive sustainability algorithm, wherein the Al block implements a deep learning neural network trained on historical data from the capacity dataset, demand dataset, and conditions dataset to generate the predictive capacity algorithm, predictive demand algorithm, prescriptive booking algorithm, prescriptive performance algorithm, and prescriptive sustainability algorithm, and wherein the deep learning neural network adapts its weights based on feedback data to finetune the decision making process;
generate a feedback by using each of the predictive capacity algorithm, the predictive demand algorithm, the prescriptive booking algorithm, the prescriptive performance algorithm, and the prescriptive sustainability algorithm;
finetune a decision making process based on the generated feedback; and
recommend a logistics supply chain to at least one user based on the determined prediction data and the decision making process wherein the recommendation includes transmitting a configured logistics supply chain recommendation to a user interface of a user terminal over a network to optimize asset utilization and shipment flow.

2. The logistics communication flow system of Claim 1, wherein the demand and capacity maximizer module is configured to:
learn at least one feedback data over a period of time using the Al block; and
modify the prediction data using the at least one feedback data.

3. The logistics communication flow system of Claim 1, wherein the on-time prediction corresponds to transportation time, transportation cost, delivery time corresponding to a transportation, a logistics partner, a shipper and a logistics supply chain based on a past event, wherein the in-budget prediction predicts a budget based on a current price along with a current market value and generates a score based on a variance based on the current price along with the current market value, wherein the loss prediction corresponds to predicting a loss or damage of goods during the logistics supply chain, wherein the contract conversion prediction defines that a shipper is going to be held accountable for a volume that the shipper promised in a contract during a supply chain, wherein the demand volatility prediction generates a confidence level on a demand forecast at the shipper based on at least one event, wherein the sustainability prediction generates a score on an overall environmental footprint for all products that are being created, shipped, delivered and sold to an end customer, wherein the happiness prediction indicates a qualitative input and an end customer feedback, wherein the predictive capacity algorithm predicts reliability of a capacity of the logistics partner, wherein the predictive demand algorithm predicts reliability of a demand that the shipper is promising to the end customer, wherein the prescriptive booking algorithm determines all bookings handled by the logistics communication flow system, wherein the prescriptive performance algorithm determines performance of a capacity side and a demand side based on an activity history, a relationship of the end customer, and a deliverability data, and wherein the prescriptive sustainability algorithm collects all the data about retailers, manufactures, companies, logistics, and the supply chain, and based on the collected data the prescriptive sustainability algorithm advertises a product and determines an environmental impact of the product the end customer is purchasing.

4. The logistics communication flow system of Claim 1, wherein the demand dataset comprises a shipper demand dataset, a shipper contract dataset, a shipper booking dataset, a shipper sub-contractor dataset, a shipper event dataset, a shipper financial dataset and a shipper qualitative dataset.

5. The logistics communication flow system of Claim 1, wherein the conditions dataset comprises a weather dataset, a traffic dataset, an economy dataset, a customs dataset, a world events dataset, a sustainability dataset and an index dataset.

6. The logistics communication flow system of Claim 1, wherein the at least one feedback data comprises a supplier feedback data, a manufacturer feedback data, a consumer products group feedback data, a distributor feedback data, a logistics partner feedback data, and a retailer feedback data.

7. A method for logistics communication flow, the method comprising:
receiving, by a logistics communication flow system, a capacity dataset, a demand dataset, and a conditions dataset, wherein the capacity dataset comprises a logistics partner capacity dataset, a logistics partner contract dataset, a logistics partner booking dataset, a logistics partner sub-contractor dataset, a logistics partner event dataset, a logistics partner financial dataset and a logistics partner qualitative dataset;
configuring, by the logistics communication flow system, a decision making algorithm based on the capacity dataset, the demand dataset, and the conditions dataset;
determining, by the logistics communication flow system, a prediction data based on the configured decision making algorithm using an artificial intelligence (Al) block, wherein the prediction data corresponds to an on-time prediction, an in-budget prediction, a loss prediction, a contract conversion prediction, a demand volatility prediction, a sustainability prediction and a happiness prediction, wherein determining the prediction data based on the configured decision making algorithm using the Al block comprises generating a predictive capacity algorithm, a predictive demand algorithm, a prescriptive booking algorithm, a prescriptive performance algorithm, and a prescriptive sustainability algorithm, wherein the Al block implements a deep learning neural network trained on historical data from the capacity dataset, demand dataset, and conditions dataset to generate the predictive capacity algorithm, predictive demand algorithm, prescriptive booking algorithm, prescriptive performance algorithm, and prescriptive sustainability algorithm, and wherein the deep learning neural network adapts its weights based on feedback data to finetune the decision making process:
generating, by the logistics communication flow system, a feedback by using each of the predictive capacity algorithm, the predictive demand algorithm, the prescriptive booking algorithm, the prescriptive performance algorithm, and the prescriptive sustainability algorithm;
finetuning, by the logistics communication flow system, a decision making process based on the generated feedback;
recommending, by the logistics communication flow system, a logistics supply chain to at least one user based on the determined prediction data and the decision making process, wherein the recommending includes transmitting a configured logistics supply chain recommendation to a user interface of a user terminal over a network to optimize asset utilization and shipment flow.

8. The method of Claim 7, wherein the method further comprises:
learning, by the logistics communication flow system, at least one feedback data over a period of time using the Al block; and modifying, by the logistics communication flow system, the prediction data using the at least one feedback data.

9. The method of Claim 7, wherein the on-time prediction corresponds to transportation time, transportation cost, delivery time corresponding to a transportation, a logistics partner, a shipper and a logistics supply chain based on a past event, wherein the in-budget prediction predicts a budget based on a current price along with a current market value and generates a score based on a variance based on the current price along with the current market value, wherein the loss prediction corresponds to predicting a loss or damage of goods during the logistics supply chain, wherein the contract conversion prediction defines that a shipper is going to be held accountable for a volume that the shipper promised in a contract during a supply chain, wherein the demand volatility prediction generates a confidence level on a demand forecast at the shipper based on at least one event, wherein the sustainability prediction generates a score on an overall environmental footprint for all products that are being created, shipped, delivered and sold to an end customer, wherein the happiness prediction indicates a qualitative input and an end customer feedback, wherein the predictive capacity algorithm predicts reliability of a capacity of the logistics partner, wherein the predictive demand algorithm predicts reliability of a demand that the shipper is promising to the end customer, wherein the prescriptive booking algorithm determines all bookings handled by the logistics communication flow system, wherein the prescriptive performance algorithm determines performance of a capacity side and a demand side based on an activity history, a relationship of the end customer, and a deliverability data, and wherein the prescriptive sustainability algorithm collects all the data about retailers, manufactures, companies, logistics, and the supply chain, and based on the collected data the prescriptive sustainability algorithm advertises a product and determines an environmental impact of the product the end customer is purchasing.

10. The method of claim 7, wherein the demand dataset comprises a shipper demand dataset, a shipper contract dataset, a shipper booking dataset, a shipper sub-contractor dataset, a shipper event dataset, a shipper financial dataset and a shipper qualitative dataset.

11. The method of claim 7, wherein the conditions dataset comprises a weather dataset, a traffic dataset, an economy dataset, a customs dataset, a world events dataset, a sustainability dataset and an index dataset.

12. The method of claim 7, wherein the at least one feedback data comprises a supplier feedback data, a manufacturer feedback data, a consumer products group feedback data, a distributor feedback data, a logistics partner feedback data, and a retailer feedback data.

## Patentansprüche

1. Ein System für den Logistik-Kommunikationsfluss, umfassend:
einen Prozessor;
einen Speicher, der zur Durchführung von Kommunikationen über eine cloudbasierte Plattform ausgelegt ist; und
wobei die cloudbasierte Plattform ein Modul zur Maximierung von Nachfrage und Kapazität aufweist, das so konfiguriert ist, dass es
Empfangen eines Kapazitätsdatensatzes, eines Bedarfsdatensatzes und eines Bedingungsdatensatzes, wobei der Kapazitätsdatensatz einen Logistikpartner-Kapazitätsdatensatz, einen Logistikpartner-Vertragsdatensatz, einen Logistikpartner-Buchungsdatensatz, einen Logistikpartner-Subunternehmerdatensatz, einen Logistikpartner-Ereignisdatensatz, einen Logistikpartner-Finanzdatensatz und einen Logistikpartner-Qualitätsdatensatz umfasst;
Konfigurieren eines Entscheidungsalgorithmus auf der Grundlage des Kapazitätsdatensatzes, des Bedarfsdatensatzes und des Bedingungsdatensatzes;
Bestimmen von Vorhersagedaten auf der Grundlage des konfigurierten Entscheidungsalgorithmus unter Verwendung eines Blocks für künstliche Intelligenz (KI), wobei die Vorhersagedaten einer Pünktlichkeitsvorhersage, einer Budgetvorhersage, einer Verlustvorhersage, einer Vertragswandlungsvorhersage, einer Nachfragevolatilitätsvorhersage, eine Nachhaltigkeitsprognose und eine Zufriedenheitsprognose, wobei die Ermittlung der Prognosedaten auf der Grundlage des konfigurierten Entscheidungsalgorithmus unter Verwendung des KI-Blocks die Generierung eines prädiktiven Kapazitätsalgorithmus, eines prädiktiven Nachfragealgorithmus, eines präskriptiven Buchungsalgorithmus, eines präskriptiven Leistungsalgorithmus und eines präskriptiven Nachhaltigkeitsalgorithmus umfasst, wobei der KI-Block ein Deep-Learning-Neuralnetzwerk implementiert, das auf der Grundlage historischer Daten aus dem Kapazitätsdatensatz, dem Nachfrage -Datensatz und dem Bedingungsdatensatz trainiert wurde, um den prädiktiven Kapazitätsalgorithmus, den prädiktiven Nachfragealgorithmus, einen präskriptiven Buchungsalgorithmus, einen präskriptiven Leistungsalgorithmus und einen präskriptiven Nachhaltigkeitsalgorithmus zu generieren, und wobei das Deep-Learning-Neuralnetzwerk seine Gewichte auf der Grundlage von Feedback-Daten anpasst, um den Entscheidungsprozess zu optimieren;
ein Feedback unter Verwendung jedes der prädiktiven Kapazitätsalgorithmen, des prädiktiven Nachfragealgorithmus, des präskriptiven Buchungsalgorithmus, des präskriptiven Leistungsalgorithmus und des präskriptiven Nachhaltigkeitsalgorithmus zu generieren;
Feinabstimmung eines Entscheidungsprozesses auf der Grundlage des generierten Feedbacks; und
Empfehlen einer Logistik-Lieferkette an mindestens einen Benutzer auf der Grundlage der ermittelten Vorhersagedaten und des Entscheidungsprozesses, wobei die Empfehlung das Übertragen einer konfigurierten Logistik-Lieferkettenempfehlung an eine Benutzerschnittstelle eines Benutzerterminals über ein Netzwerk umfasst, um die Auslastung der Ressourcen und den Versandfluss zu optimieren.

2. Das Logistik-Kommunikationsflusssystem nach Anspruch 1, wobei das Modul zur Maximierung von Nachfrage und Kapazität so konfiguriert ist, ferner die folgenden Schritte auszuführen
Lernen mindestens eines Feedback-Datums über einen Zeitraum unter Verwendung des Al-Blocks; und
Modifizieren der Vorhersagedaten unter Verwendung des mindestens einen Feedback-Datums.

3. Das Logistik-Kommunikationsflusssystem nach Anspruch 1, wobei die Pünktlichkeitsvorhersage der Transportzeit, den Transportkosten, der Lieferzeit entsprechend einem Transport, einem Logistikpartner, einem Versender und einer Logistik-Lieferkette auf der Grundlage eines vergangenen Ereignisses entspricht, wobei die Budgetvorhersage ein Budget auf der Grundlage eines aktuellen Preises zusammen mit einem aktuellen Marktwert vorhersagt und eine Punktzahl auf der Grundlage einer Abweichung vom aktuellen Preis zusammen mit einer Abweichung vom aktuellen Marktwert generiert, wobei die Verlustvorhersage der Vorhersage eines Verlusts oder einer Beschädigung von Waren während der Logistiklieferkette entspricht, wobei die Vertragswandlungsvorhersage definiert, dass ein Versender für ein Volumen verantwortlich gemacht wird, das der Versender in einem Vertrag während einer Lieferkette zugesagt hat, wobei die Nachfragevolatilitätsvorhersage ein Konfidenzniveau für eine Nachfrageprognose beim Versender auf der Grundlage mindestens eines Ereignisses generiert, wobei die Nachhaltigkeitsvorhersage eine Bewertung der gesamten Umweltbilanz für alle Produkte generiert, die hergestellt, versandt, geliefert und an einen Endkunden verkauft werden, wobei die Zufriedenheitsprognose einen qualitativen Input und ein Endkunden-Feedback angibt, wobei der prädiktive Kapazitätsalgorithmus die Zuverlässigkeit einer Kapazität des Logistikpartners prognostiziert, wobei der prädiktive Nachfragealgorithmus die Zuverlässigkeit einer Nachfrage prognostiziert, die der Versender dem Endkunden verspricht, wobei der präskriptive Buchungsalgorithmus alle Buchungen ermittelt, die vom Logistikkommunikationsflusssystem verarbeitet werden, wobei der präskriptive Leistungsalgorithmus die Leistung einer Kapazitätsseite und einer Nachfrageseite auf der Grundlage einer Aktivitätshistorie, eine Beziehung des Endkunden und Lieferbarkeitsdaten, und wobei der präskriptive Nachhaltigkeitsalgorithmus alle Daten über Einzelhändler, Hersteller, Unternehmen, Logistik und die Lieferkette sammelt und auf der Grundlage der gesammelten Daten das präskriptive Nachhaltigkeitsalgorithmus ein Produkt bewirbt und eine Umweltbelastung des Produkts bestimmt, das der Endkunde kauft.

4. Das Logistik-Kommunikationsflusssystem nach Anspruch 1, wobei der Nachfragedatensatz einen Datensatz zur Nachfrage des Versenders, einen Datensatz zu Verträgen des Versenders, einen Datensatz zu Buchungen des Versenders, einen Datensatz zu Subunternehmern des Versenders, einen Datensatz zu Ereignissen des Versenders, einen Datensatz zu Finanzen des Versenders und einen qualitativen Datensatz des Versenders umfasst.

5. Das Logistik-Kommunikationsflusssystem nach Anspruch 1, wobei der Bedingungsdatensatz einen Wetterdatensatz, einen Verkehrsdaten-satz, einen Wirtschaftsdaten-satz, einen Zolldaten-satz, einen Weltgeschehnis-datensatz, einen Nachhaltigkeitsdatensatz und einen Indexdatensatz umfasst.

6. Das Logistik-Kommunikationsflusssystem nach Anspruch 1, wobei die mindestens einen Rückmeldungsdaten Lieferantenrückmeldungsdaten, Herstellerrückmeldungsdaten, Rückmeldungsdaten von Konsumgütergruppen, Rückmeldungsdaten von Händlern, Rückmeldungsdaten von Logistikpartnern und Rückmeldungsdaten von Einzelhändlern umfassen.

7. Verfahren für den Logistik-Kommunikationsfluss, wobei das Verfahren umfasst:
Empfangen eines Kapazitätsdatensatzes, eines Bedarfsdatensatzes und eines Bedingungsdatensatzes durch ein Logistik-Kommunikationsflusssystem, wobei der Kapazitätsdatensatz einen Logistikpartner-Kapazitätsdatensatz, einen Logistikpartner-Vertragsdatensatz, einen Logistikpartner-Buchungsdatensatz, einen Logistikpartner-Subunternehmerdatensatz, einen Logistikpartner-Ereignisdatensatz, einen Logistikpartner-Finanzdatensatz und einen Logistikpartner-Qualitätsdatensatz umfasst;
Konfigurieren eines Entscheidungsalgorithmus durch das Logistik-Kommunikationsflusssystem auf der Grundlage des Kapazitätsdatensatzes, des Nachfragedatensatzes und des Bedingungsdatensatzes;
Bestimmen von Vorhersagedaten durch das Logistik-Kommunikationsflusssystem auf der Grundlage des konfigurierten Entscheidungsalgorithmus unter Verwendung eines Blocks für künstliche Intelligenz (KI), wobei die Vorhersagedaten einer Pünktlichkeitsvorhersage, einer Budgetvorhersage, einer Verlustvorhersage, einer Vertragswandlungsvorhersage, einer Nachfragevolatilitätsvorhersage, eine Nachhaltigkeitsprognose und eine Zufriedenheitsprognose, wobei die Bestimmung der Prognose sdaten auf der Grundlage des konfigurierten Entscheidungsalgorithmus unter Verwendung des KI-Blocks die Generierung eines prädiktiven Kapazitätsalgorithmus, eines prädiktiven Nachfragealgorithmus, eines präskriptiven Buchungsalgorithmus, eines präskriptiven Leistungsalgorithmus und eines präskriptiven Nachhaltigkeitsalgorithmus umfasst, wobei der KI-Block ein Deep-Learning-Neuralnetzwerk implementiert, das auf historischen Daten aus dem Kapazitätsdatensatz, dem Nachfragedatensatz und dem Bedingungsdatensatz trainiert wurde, um den prädiktiven Kapazitätsalgorithmus, den prädiktiven Nachfragealgorithmus, einen präskriptiven Buchungsalgorithmus, einen präskriptiven Leistungsalgorithmus und einen präskriptiven Nachhaltigkeitsalgorithmus zu generieren, und wobei das Deep-Learning-Neuralnetzwerk seine Gewichte auf der Grundlage von Feedback-Daten anpasst, um den Entscheidungsprozess zu optimieren:
Erzeugen eines Feedbacks durch das Logistik-Kommunikationsflusssystem unter Verwendung jedes der folgenden Algorithmen: Vorhersagealgorithmus für Kapazitäten, Vorhersagealgorithmus für Nachfrage, Vorschriftsalgorithmus für Buchungen, Vorschriftsalgorithmus für Leistung und Vorschriftsalgorithmus für Nachhaltigkeit;
Feinabstimmung eines Entscheidungsprozesses durch das Logistik-Kommunikationsflusssystem auf der Grundlage des generierten Feedbacks;
Empfehlen einer Logistik-Lieferkette durch das Logistik-Kommunikationsflusssystem an mindestens einen Benutzer auf der Grundlage der ermittelten Vorhersagedaten und des Entscheidungsprozesses, wobei das Empfehlen das Übertragen einer konfigurierten Logistik-Lieferkettenempfehlung an eine Benutzerschnittstelle eines Benutzerterminals über ein Netzwerk umfasst, um die Auslastung der Ressourcen und den Versandfluss zu optimieren.

8. Verfahren nach Anspruch 7, wobei das Verfahren ferner umfasst:
Lernen mindestens einer Rückmeldungsdaten über einen Zeitraum hinweg durch das Logistik-Kommunikationsflusssystem unter Verwendung des KI-Blocks; und Modifizieren der Vorhersagedaten durch das Logistik-Kommunikationsflusssystem unter Verwendung der mindestens einen Rückmeldungsdaten.

9. Das Verfahren nach Anspruch 7, wobei die Pünktlichkeitsvorhersage der Transportzeit, den Transportkosten, der Lieferzeit entsprechend einem Transport, einem Logistikpartner, einem Versender und einer Logistiklieferkette auf der Grundlage eines vergangenen Ereignisses entspricht, wobei die Budgetvorhersage ein Budget auf der Grundlage eines aktuellen Preises zusammen mit einem aktuellen Marktwert vorhersagt und eine Bewertung auf der Grundlage einer Abweichung vom aktuellen Preis zusammen mit dem aktuellen Marktwert generiert, wobei die Verlustvorhersage der Vorhersage eines Verlusts oder einer Beschädigung von Waren während der Logistiklieferkette entspricht, wobei die Vertragswandlungsvorhersage definiert, dass ein Versender für ein Volumen verantwortlich gemacht wird, das der Versender in einem Vertrag während einer Lieferkette zugesagt hat, wobei die Nachfragevolatilitätsvorhersage ein Konfidenzniveau für eine Nachfrageprognose beim Versender auf der Grundlage mindestens eines Ereignisses generiert, wobei die Nachhaltigkeitsvorhersage eine Bewertung der gesamten Umweltbilanz für alle Produkte generiert, die hergestellt, versandt, geliefert und an einen Endkunden verkauft werden, wobei die Zufriedenheitsprognose einen qualitativen Input und ein Endkunden-Feedback angibt, wobei der Prognosealgorithmus für die Kapazität die Zuverlässigkeit einer Kapazität des Logistikpartners prognostiziert, wobei der Prognosealgorithmus für die Nachfrage die Zuverlässigkeit einer Nachfrage prognostiziert, die der Versender dem Endkunden verspricht, wobei der präskriptive Buchungsalgorithmus alle Buchungen ermittelt, die vom Logistikkommunikationsflusssystem verarbeitet werden, wobei der präskriptive Leistungsalgorithmus die Leistung einer Kapazitätsseite und einer Nachfrageseite auf der Grundlage einer Aktivitätshistorie, eine Beziehung des Endkunden und Lieferbarkeitsdaten, und wobei der präskriptive Nachhaltigkeits salgorithmus alle Daten über Einzelhändler, Hersteller, Unternehmen, Logistik und die Lieferkette sammelt und auf der Grundlage der gesammelten Daten der präskriptive Nachhaltigkeitsalgorithmus ein Produkt bewirbt und eine Umweltbelastung des Produkts bestimmt, das der Endkunde kauft.

10. Verfahren nach Anspruch 7, wobei der Nachfragedatensatz einen Datensatz zur Nachfrage von Versendern, einen Datensatz zu Verträgen von Versendern, einen Datensatz zu Buchungen von Versendern, einen Datensatz zu Subunternehmern von Versendern, einen Datensatz zu Ereignissen von Versendern, einen Datensatz zu Finanzen von Versendern und einen qualitativen Datensatz zu Versendern umfasst.

11. Verfahren nach Anspruch 7, wobei der Bedingungsdatensatz einen Wetterdatensatz, einen Verkehrsdaten-satz, einen Wirtschaftsdaten-satz, einen Zolldaten-satz, einen Weltgeschehensdatensatz, einen Nachhaltigkeitsdatensatz und einen Indexdatensatz umfasst.

12. Verfahren nach Anspruch 7, wobei die mindestens einen Rückmeldungsdaten Rückmeldungsdaten von Lieferanten, Rückmeldungsdaten von Herstellern, Rückmeldungsdaten von Konsumgütergruppen, Rückmeldungsdaten von Händlern, Rückmeldungsdaten von Logistikpartnern und Rückmeldungsdaten von Einzelhändlern umfassen.

## Revendications

1. Système de flux de communication logistique, comprenant :
un processeur ;
une mémoire adaptée pour mettre en œuvre des communications via une plateforme basée sur le cloud ; et
la plateforme basée sur le cloud comportant un module de maximisation de la demande et de la capacité configuré pour :
recevoir un ensemble de données de capacité, un ensemble de données de demande et un ensemble de données de conditions, dans lequel l'ensemble de données de capacité comprend un ensemble de données de capacité des partenaires logistiques, un ensemble de données de contrats des partenaires logistiques, un ensemble de données de réservations des partenaires logistiques, un ensemble de données de sous-traitants des partenaires logistiques, un ensemble de données d'événements des partenaires logistiques, un ensemble de données financières des partenaires logistiques et un ensemble de données qualitatives des partenaires logistiques ;
configurer un algorithme de prise de décision basé sur l'ensemble de données de capacité, l'ensemble de données de demande et l'ensemble de données de conditions ;
déterminer des données de prévision basées sur l'algorithme de prise de décision configuré à l'aide d'un bloc d'intelligence artificielle (IA), les données de prévision correspondant à une prévision de ponctualité, une prévision de respect du budget, une prévision de perte, une prévision de conversion de contrat, une prévision de volatilité de la demande, une prévision de durabilité et une prévision de satisfaction, dans lequel la détermination des données de prévision sur la base de l'algorithme de prise de décision configuré à l'aide du bloc IA comprend la génération d'un algorithme de capacité prédictive, d'un algorithme de demande prédictive, d'un algorithme de réservation prescriptive, d'un algorithme de performance prescriptive et d'un algorithme de durabilité prescriptive, dans lequel le bloc IA met en œuvre un réseau neuronal d'apprentissage profond formé sur des données historiques provenant de l'ensemble de données sur la capacité, de l'ensemble de données sur l' de la demande et de l'ensemble de données sur les conditions afin de générer l'algorithme de capacité prédictive, l'algorithme de demande prédictive, l'algorithme de réservation prescriptive, l'algorithme de performance prescriptive et l'algorithme de durabilité prescriptive, et dans lequel le réseau neuronal d'apprentissage profond adapte ses poids sur la base des données de rétroaction afin d'affiner le processus de prise de décision ;
générer un retour d'information en utilisant chacun des algorithmes prédictifs de capacité, de demande, de réservation, de performance et de durabilité ;
affiner un processus décisionnel sur la base du retour d'information généré ; et
recommander une chaîne logistique à au moins un utilisateur sur la base des données de prédiction déterminées et du processus décisionnel, la recommandation comprenant la transmission d'une recommandation de chaîne logistique configurée à une interface utilisateur d'un terminal utilisateur via un réseau afin d'optimiser l'utilisation des actifs et le flux d'expédition.

2. Système de flux de communication logistique selon la revendication 1, dans lequel le module de maximisation de la demande et de la capacité est configuré pour :
apprendre au moins une donnée de retour d'information sur une période de temps à l'aide du bloc Al ; et
modifier les données de prévision à l'aide d'au moins une donnée de retour d'information.

3. Le système de flux de communication logistique selon la revendication 1, dans lequel la prédiction de ponctualité correspond au temps de transport, au coût de transport, au temps de livraison correspondant à un transport, à un partenaire logistique, à un expéditeur et à une chaîne logistique sur la base d'un événement passé, dans lequel la prédiction de respect du budget prédit un budget sur la base d'un prix actuel ainsi que d'une valeur marchande actuelle et génère un score sur la base d'un écart par rapport au prix actuel ainsi que d' t de la valeur marchande actuelle, dans lequel la prédiction de perte correspond à la prédiction d'une perte ou d'un dommage des marchandises pendant la chaîne logistique, dans lequel la prédiction de conversion de contrat définit qu'un expéditeur sera tenu responsable d'un volume qu'il a promis dans un contrat pendant une chaîne logistique, dans lequel la prédiction de volatilité de la demande génère un niveau de confiance sur une prévision de la demande chez l'expéditeur sur la base d'au moins un événement, dans lequel la prédiction de durabilité génère un score sur l'empreinte environnementale globale pour tous les produits qui sont créés, expédiés, livrés et vendus à un client final, dans lequel la prédiction du bonheur indique une entrée qualitative et un retour d'information du client final, dans lequel l'algorithme de prédiction de la capacité prédit la fiabilité d'une capacité du partenaire logistique, dans lequel l'algorithme de prédiction de la demande prédit la fiabilité d'une demande que l'expéditeur promet au client final, dans lequel l'algorithme de réservation prescriptif détermine toutes les réservations traitées par le système de flux de communication logistique, dans lequel l'algorithme de performance prescriptif détermine la performance d'un côté capacité et d'un côté demande sur la base d'un historique d'activité, une relation avec le client final et des données de livrabilité, et dans lequel l'algorithme de durabilité prescriptive collecte toutes les données concernant les détaillants, les fabricants, les entreprises, la logistique et la chaîne d'approvisionnement, et sur la base des données collectées, l'algorithme de durabilité prescriptive fait la promotion d'un produit et détermine l'impact environnemental du produit que le client final achète.

4. Le système de flux de communication logistique de la revendication 1, dans lequel l'ensemble de données de demande comprend un ensemble de données de demande de l'expéditeur, un ensemble de données de contrat de l'expéditeur, un ensemble de données de réservation de l'expéditeur, un ensemble de données de sous-traitant de l'expéditeur, un ensemble de données d'événement de l'expéditeur, un ensemble de données financières de l'expéditeur et un ensemble de données qualitatives de l'expéditeur.

5. Système de flux de communication logistique selon la revendication 1, dans lequel l'ensemble de données sur les conditions comprend un ensemble de données météorologiques, un ensemble de données sur le trafic, un ensemble de données économiques, un ensemble de données douanières, un ensemble de données sur les événements mondiaux, un ensemble de données sur la durabilité et un ensemble de données sur les indices.

6. Système de flux de communication logistique selon la revendication 1, dans lequel les au moins une donnée de retour d'information comprennent une donnée de retour d'information du fournisseur, une donnée de retour d'information du fabricant, une donnée de retour d'information du groupe de produits de consommation, une donnée de retour d'information du distributeur, une donnée de retour d'information du partenaire logistique et une donnée de retour d'information du détaillant.

7. Procédé pour le flux de communication logistique, le procédé comprenant :
la réception, par un système de flux de communication logistique, d'un ensemble de données de capacité, d'un ensemble de données de demande et d'un ensemble de données de conditions, dans lequel l'ensemble de données de capacité comprend un ensemble de données de capacité des partenaires logistiques, un ensemble de données de contrats des partenaires logistiques, un ensemble de données de réservations des partenaires logistiques, un ensemble de données de sous-traitants des partenaires logistiques, un ensemble de données d'événements des partenaires logistiques, un ensemble de données financières des partenaires logistiques et un ensemble de données qualitatives des partenaires logistiques ;
la configuration, par le système de flux de communication logistique, d'un algorithme de prise de décision basé sur l'ensemble de données de capacité, l'ensemble de données de demande et l'ensemble de données de conditions ;
déterminer, à l'aide du système de flux de communication logistique, des données de prévision basées sur l'algorithme de prise de décision configuré à l'aide d'un bloc d'intelligence artificielle (IA), les données de prévision correspondant à une prévision de ponctualité, une prévision de respect du budget, une prévision de perte, une prévision de conversion de contrat, une prévision de volatilité de la demande, une prévision de durabilité et une prévision de satisfaction, dans lequel la détermination des données d' s de prévision sur la base de l'algorithme de prise de décision configuré à l'aide du bloc IA comprend la génération d'un algorithme de capacité prédictive, d'un algorithme de demande prédictive, d'un algorithme de réservation prescriptive, d'un algorithme de performance prescriptive et d'un algorithme de durabilité prescriptive, dans lequel le bloc IA met en œuvre un réseau neuronal d'apprentissage profond formé sur des données historiques provenant de l'ensemble de données sur la capacité, de l'ensemble de données sur la demande et de l'ensemble de données sur les conditions afin de générer l'algorithme de capacité prédictive, l'algorithme de demande prédictive, l'algorithme de réservation prescriptif, l'algorithme de performance prescriptif et l'algorithme de durabilité prescriptif, et dans lequel le réseau neuronal d'apprentissage profond adapte ses poids sur la base des données de rétroaction afin d'affiner le processus de prise de décision :
générer, à l'aide du système de flux de communication logistique, un retour d'information en utilisant chacun des algorithmes suivants : l'algorithme de capacité prédictive, l'algorithme de demande prédictive, l'algorithme de réservation prescriptive, l'algorithme de performance prescriptive et l'algorithme de durabilité prescriptive ;
affiner, à l'aide du système de flux de communication logistique, un processus décisionnel basé sur le retour d'information généré ;
recommander, par le système de flux de communication logistique, une chaîne d'approvisionnement logistique à au moins un utilisateur sur la base des données de prévision déterminées et du processus décisionnel, la recommandation comprenant la transmission d'une recommandation de chaîne d'approvisionnement logistique configurée à une interface utilisateur d'un terminal utilisateur via un réseau afin d'optimiser l'utilisation des actifs et le flux d'expédition.

8. Procédé selon la revendication 7, dans lequel le procédé comprend en outre :
l'apprentissage, par le système de flux de communication logistique, d'au moins une donnée de retour d'information sur une période de temps à l'aide du bloc IA ; et la modification, par le système de flux de communication logistique, des données de prévision à l'aide de la au moins une donnée de retour d'information.

9. Procédé selon la revendication 7, dans lequel la prévision de ponctualité correspond au temps de transport, au coût de transport, au temps de livraison correspondant à un transport, à un partenaire logistique, à un expéditeur et à une chaîne logistique sur la base d'un événement passé, dans lequel la prévision de respect du budget prévoit un budget sur la base d'un prix actuel ainsi que d'une valeur marchande actuelle et génère un score sur la base d'un écart par rapport au prix actuel ainsi qu'à la valeur marchande actuelle, dans lequel la prédiction de perte correspond à la prédiction d'une perte ou d'un dommage des marchandises pendant la chaîne logistique, dans lequel la prédiction de conversion de contrat définit qu'un expéditeur sera tenu responsable d'un volume que l'expéditeur a promis dans un contrat pendant une chaîne logistique, dans lequel la prédiction de volatilité de la demande génère un niveau de confiance sur une prévision de la demande chez l'expéditeur sur la base d'au moins un événement, dans lequel la prédiction de durabilité génère un score sur l'empreinte environnementale globale pour tous les produits qui sont créés, expédiés, livrés et vendus à un client final, dans lequel la prédiction du bonheur indique une entrée qualitative et un retour d'information du client final, dans lequel l'algorithme de prédiction de la capacité prédit la fiabilité d'une capacité du partenaire logistique, dans lequel l'algorithme de prédiction de la demande prédit la fiabilité d'une demande que l'expéditeur promet au client final, dans lequel l'algorithme de réservation prescriptif détermine toutes les réservations traitées par le système de flux de communication logistique, dans lequel l'algorithme de performance prescriptif détermine la performance d'un côté capacité et d'un côté demande sur la base d'un historique d'activité, une relation avec le client final et des données de livrabilité, et dans lequel l'algorithme d' s de durabilité prescriptif collecte toutes les données concernant les détaillants, les fabricants, les entreprises, la logistique et la chaîne d'approvisionnement, et sur la base des données collectées, l'algorithme de durabilité prescriptif fait la promotion d'un produit et détermine l'impact environnemental du produit que le client final achète.

10. Procédé selon la revendication 7, dans lequel l'ensemble de données de demande comprend un ensemble de données de demande d'expéditeur, un ensemble de données de contrat d'expéditeur, un ensemble de données de réservation d'expéditeur, un ensemble de données de sous-traitant d'expéditeur, un ensemble de données d'événement d'expéditeur, un ensemble de données financières d'expéditeur et un ensemble de données qualitatives d'expéditeur.

11. Procédé selon la revendication 7, dans lequel l'ensemble de données sur les conditions comprend un ensemble de données météorologiques, un ensemble de données sur le trafic, un ensemble de données économiques, un ensemble de données douanières, un ensemble de données sur les événements mondiaux, un ensemble de données sur la durabilité et un ensemble de données sur les indices.

12. Procédé selon la revendication 7, dans lequel les au moins une donnée de retour d'information comprennent une donnée de retour d'information du fournisseur, une donnée de retour d'information du fabricant, une donnée de retour d'information du groupe de produits de consommation, une donnée de retour d'information du distributeur, une donnée de retour d'information du partenaire logistique et une donnée de retour d'information du détaillant.
